# EUROPEAN PATENT APPLICATION

(11) **EP 2 618 037 A1**
(43) Date of publication of application: **24.07.2013**
(21) Application number: 10857304.9
(22) Date of filing: 26.10.2010
(51) Int. Cl.: F16L 59/06

(54) **VACUUM INSULATION MATERIAL AND METHOD FOR PRODUCING SAME**

(30) Priority: 17.09.2010 JP 2010209120
(71) Applicant: Fuji Electric Co. Ltd., Kawasaki-shi 210-9530 (JP)
(72) Inventor: DENO Hiroshi, Kawasaki-shi 210-9530 (JP)
(74) Representative: Appelt, Christian W.
(86) International application number: PCT/JP2010/068948
(87) International publication number: WO 2012/035671

(57) **Abstract**

The present invention provides a vacuum insulation material having excellent thermal insulation even in a high-temperature environment over a long period of time, and also provides a method for producing the same.

A core starting material composition is molded into a predetermined shape, the core starting material composition containing a talc-based clay mineral, a potassium compound selected from potassium carbonate and potassium bicarbonate, and water, and the resultant core starting material composition is fired at a temperature lower than a melting point of the talc-based clay mineral, to produce a core material formed of a porous fired body in which a layered structure of the talc-based clay mineral is cleaved and at least a portion of the cleaved structure is partially bonded. This core material is then vacuum packaged in a gas-barrier packaging, to produce a vacuum insulation material.

## Description

### TECHNICAL FIELD

The present invention relates to a vacuum insulation material and a method for producing the same.

### BACKGROUND ART

A vacuum insulation material is an insulation material having a core material vacuum-packaged in a gas-barrier packaging, and lowers thermal conductance of gas by keeping the inside thereof vacuum. With its excellent thermal insulation, the vacuum insulation material is used in various industries associated with electrical products such as freezers, refrigerators, heat insulation containers and vending machines, as well as wall materials for housing.

An inorganic fiber core material such as glass fiber, resin foam core material such as urethane foam, finely-powdered core material such as finely-powdered silica and the like are used as the core material of the vacuum insulation material. Due to its excellent thermal insulation, especially the vacuum insulation material with an inorganic fiber core material has been extensively used in the applications requiring higher thermal insulation. Furthermore, various improvements of the inorganic fiber core material have been made in order to further improve the thermal insulation of the vacuum insulation material.

For example, if inorganic fibers constituting the core material are orientated in an irregular fashion, each of the inorganic fibers of the core material functions as a heat transfer path, increasing a thermal conductivity of the core material. Patent Document 1, therefore, has inorganic fibers arranged in a stacked manner substantially perpendicular to a heat transfer direction, to prevent heat from being transferred from the inorganic fibers and to further reduce the thermal conductivity of the core material.

Furthermore, use of a binder for molding an inorganic fiber core material further facilitates heat conduction in an insulation direction as the binder, solidified, functions as a thermal cross-linking. Patent Document 2, therefore, produces a core material of a certain shape without using a binder.

Patent Document 1: Japanese Patent Publication No. 3513143
Patent Document 2: Japanese Patent Publication No. 3580315

### DISCLOSURE OF THE INVENTION

In the vacuum insulation material with an inorganic fiber material core material, however, the thermal conductivity increases significantly as ambient temperature increases, and the thermal insulation thereof in a high-temperature environment is therefore not quite satisfactory. This is considered to be because the gaseous molecules of the inorganic fiber core material, the mobility of which is relatively favorable, start moving actively as the ambient temperature increases, thereby enhancing the thermal conductivity of the gas.

When the vacuum insulation material is exposed to a high-temperature environment, outgas is generated from a packaging and the like, and consequently the degree of vacuum gradually decreases. As a result, the thermal insulation of this vacuum insulation material deteriorates with time.

An object of the present invention, therefore, is to provide a vacuum insulation material having excellent thermal insulation even in a high-temperature environment over a long period of time, and to also provide a method for producing the same.

In order to achieve the object described above, the present invention provides a vacuum insulation material, having a core material formed of a porous fired body in which a layered structure of a talc-based clay mineral is cleaved and at least a portion of the cleaved structure is partially bonded, wherein the core material is vacuum packaged in a gas-barrier packaging.

In the vacuum insulation material according to the present invention, it is preferred that the core material contain 13 to 59 mass% of the talc-based clay mineral and 41 to 87 mass% of a potassium compound. It is preferred that the potassium compound be at least one type selected from potassium oxide, potassium carbonate, and potassium bicarbonate.

In the vacuum insulation material according to the present invention, it is preferred that the core material have a bulk density of 0.22 to 1.98 g/cm³ in a vacuum-packaged state thereof.

In the vacuum insulation material according to the present invention, it is preferred that the core material have a porosity of 45 to 82% in a vacuum-packaged state thereof.

In the vacuum insulation material according to the present invention, it is preferred that a thermal conductivity obtained at an average temperature of 20°C be 0.015 W/mK or lower.

A method for producing a vacuum insulation material according to the present invention has the steps of: producing a core material by molding a core starting material composition into a predetermined shape, the core starting material composition containing a talc-based clay mineral, a potassium compound selected from potassium carbonate and potassium bicarbonate, and water, and by firing the resultant core starting material composition at a temperature lower than a melting point of the talc-based clay mineral; and vacuum packaging the produced core material in a gas-barrier packaging.

In the method for producing a vacuum insulation material according to the present invention, it is preferred that the talc-based clay mineral have an average particle diameter of 1 to 25 µm.

In the method for producing a vacuum insulation material according to the present invention, it is preferred to use, as the core starting material composition, a material that contains 10 to 50 mass% of the talc-based clay mineral and 50 to 90 mass% of the potassium compound in a solid content and further contains 5 to 20 parts by mass of the water with respect to a total of 100 parts by mass of the talc-based clay mineral and the potassium compound.

In the method for producing a vacuum insulation material according to the present invention, it is preferred to use, as the core starting material composition, a material that contains 1 to 50 parts by mass of an organic foaming agent with an amide group and/or azo group with respect to a total of 100 parts by mass of the talc-based clay mineral and the potassium compound.

In the method for producing a vacuum insulation material according to the present invention, it is preferred that the core starting material composition be roll-formed and thereafter fired.

In the method for producing a vacuum insulation material according to the present invention, it is preferred that the core starting material composition be fired at 700 to 1,000°C.

In the method for producing a vacuum insulation material, it is preferred that the core material have a bulk density of 0.2 to 1.8 g/cm³ before being vacuum packaged and 0.22 to 1.98 g/cm³ after being vacuum packaged.

In the method for producing a vacuum insulation material according to the present invention, it is preferred that the core material have a porosity of 50 to 90% before being vacuum packaged and 45 to 82% after being vacuum packaged.

The present invention provides a vacuum insulation material having a core material formed of a porous fired body in which a layered structure of a talc-based clay mineral is cleaved and at least a portion of the cleaved structure is partially bonded. This porous fired body has a card-house structure in which cleaved objects of talc-based clay mineral ("talc cleaved objects," hereinafter) are stacked intricately wherein the talc-based clay mineral layers are spaced apart from each other. This structure of the porous fired body creates complicated transfer pathways of gaseous molecules, lowering the mobility of the gaseous molecules, and low temperature-dependent thermal conductivity.

Because the talc cleaved objects are partially bonded to each other by a solid-state reaction, the card-house structure of the porous fired body cannot be destroyed easily even when the porous fired body is vacuum packaged in the gas-barrier packaging. Thus, high porosity can be maintained.

Furthermore, even when outgas is generated from the packaging as a result of exposing the vacuum insulation material in a high-temperature environment, the porous fired body can absorb the outgas. Because the porous fired body is insusceptible to outgas, and the degree of vacuum inside the packaging does not easily deteriorate over time, excellent thermal insulation can be maintained over a long period of time.

Moreover, the method for producing a vacuum insulation material according to the present invention forms a core starting material composition into a predetermined shape, the core starting material composition containing a talc-based clay mineral, a potassium compound selected from potassium carbonate and potassium bicarbonate, and water, and fires the resultant core starting material composition at a temperature lower than a melting point of the talc-based clay mineral, to produce a core material having a porous fired body wherein the potassium compound pyrolytically decomposes between the talc-based clay mineral layers into blowing gas such as carbon dioxide and the talc-based clay mineral layers are expanded and cleaved so that at least a portion of the cleaved layers is partially bonded. This method can produce a vacuum insulation material that has excellent thermal insulation over a long period of time even in a high-temperature environment, by vacuum packaging the core material in a gas-barrier packaging.

With the talc-based clay mineral having an average particle diameter of 1 to 25 µm, the card-house structure of the core material that has a pore size smaller than a mean free path of the gaseous molecules, can be formed easily. As a result, a vacuum insulation material with excellent thermal insulation can be produced.

### BRIEF DESCRIPTION OF THE DRAWINGS

Fig. 1 is a model diagram describing the formation of a core material according to the present invention;
Fig. 2 is an electron micrograph (500 magnification) of a core material of Example 1;
Fig. 3 is an electron micrograph (2,000 magnification) of a range a shown in Fig. 2;
Fig. 4 is an electron micrograph (5,000 magnification) of a range b shown in Fig. 3;
Fig. 5 is an electron micrograph (10,000 magnification) of a range c shown in Fig. 4;
Fig. 6 is a table explaining the changes in thermal conductivities of vacuum insulation materials of Examples 1 and 2 and Comparative Example 1 at an average temperature of 20 to 60°C; and
Fig. 7 is a table explaining the relationship between the content of a potassium compound in a core starting material composition and the thermal conductivity of the vacuum insulation material at an average temperature of 20°C.

### BEST MODE FOR CARRYING OUT THE INVENTION

A core material of a vacuum insulation material according to the present invention is configured by a porous fired body in which a layered structure of a talc-based clay mineral is cleaved and at least a portion of the cleaved structure is partially bonded. This porous fired body has a card-house structure in which talc cleaved objects are stacked intricately wherein the talc-based clay mineral layers are spaced apart from each other. The stacked talc cleaved objects are partially bonded to each other by a solid-state reaction, to enhance the firmness of the porous fired body. The card-house structure of the porous fired body can be observed with an electron microscope. Note that in the present invention the description saying "a layered structure of a talc-based clay mineral is cleaved" means that the talc-based clay mineral layers are expanded and detached from each other. In addition, in the present invention, the term "talc cleaved objects" includes not only the configuration in which the talc-based clay mineral layers are completely detached from each other one by one, but also the configuration in which the plurality of talc-based clay mineral layers are grouped together.

The talc-based clay mineral of the core material of the vacuum insulation material according to the present invention is a silicate clay mineral in which are stacked a plurality of three-layered structures (2 layers : 1 layer) of neutral charge, each of which has a magnesium or aluminum octahedral layer between two silica tetrahedron layers. Talc (chemical formula: Mg₃Si₄O₁₀(OH)₂) has a three-layered structure having a magnesium octahedral layer between two silica tetrahedron layers, as a unit. Pyrophyllite (chemical formula: Al₂Si₄O₁₀(OH)₂) has a three-layered structure having an aluminum octahedral layer between two silica tetrahedron layers, as a unit. It should be noted that a natural talc-based clay mineral contains elements such as Fe, Al, Na, and F as impurities.

The core material of the vacuum insulation material according to the present invention preferably contains 13 to 59 mass%, or more preferably 20 to 40 mass%, of the talc-based clay mineral. The potassium compound is contained in the core material in a content of, preferably, 41 to 87 mass%, or more preferably 51 to 73 mass%. Examples of the potassium compound include potassium oxide, potassium carbonate, and potassium bicarbonate. Above all, potassium carbonate is preferred. Potassium carbonate excels in absorbing and removing hydrocarbon or other outgas generated from the packaging, as well as moisture. Therefore, the vacuum insulation material can keep its degree of vacuum even when being exposed in a high-temperature environment, and maintain excellent thermal insulation over a long period of time.

In the vacuum insulation material according to the present invention, the core material preferably has a bulk density of 0.22 to 1.98 g/cm³, or more preferably 0.22 to 1.65 g/cm³, in a vacuum-packaged state. The bulk density less than 0.22 g/cm³ cannot provide sufficient strength in the core material. However, the bulk density exceeding 1. 98 g/cm³ leads to an increase in the thermal conductivity of the core material. Note that the bulk density of the core material is measured using a fixed volume expansion method.

In the vacuum insulation material according to the present invention, the core material preferably has a porosity of 45 to 82%, or more preferably 63 to 82%, in the vacuum-packaged state. The porosity less than 45% leads to an increase in the thermal conductivity of the core material. However, the porosity exceeding 82% cannot provide sufficient strength in the core material. Note that the porosity of the core material is measured using the fixed volume expansion method.

In the vacuum insulation material according to the present invention, the pore size of the vacuum-packaged core material is preferably smaller than a mean free path of gaseous molecules. Setting the pore size of the core material to be smaller than the mean free path of the gaseous molecules can lower the thermal conductivity of the gas. The mean free path of the gaseous molecules is the average value of the distances between positions where the gaseous molecules collide and positions where the gaseous molecules collide next. For example, the mean free path of air under atmospheric pressure is approximately 68 nm, and the mean free path of air under an atmospheric pressure of approximately 1 pa is approximately 100 µm. The pore size of the core material can be measured by observing it under a scanning electron microscope (SEM).

The packaging used in the vacuum insulation material according to the present invention is not particularly limited as long as it has gas barrier properties. Examples of the packaging include a laminate material configured by a thermal fusion layer, gas-barrier layer, and protective layer. Examples of the thermal fusion layer include a polyethylene film, polypropylene film, polyacrylonitrile film, and polyethylene terephthalate film. Examples of gas-barrier layer include a metal foil or a metal deposited film configured by aluminum, iron, copper, nickel, alloy thereof and the like. Examples of the protective layer include a nylon film.

In the vacuum insulation material according to the present invention, the core material configured by the porous fired body is vacuum packaged in the gas-barrier packaging. The pressure inside the packaging is preferably reduced to 10 Pa or lower or more preferably 1 to 10 Pa. Sufficient thermal insulation cannot be obtained when the pressure inside the packaging exceeds 10 Pa.

The method for producing the vacuum insulation material according to the present invention is described next.

First of all, a method for producing the core material is described.

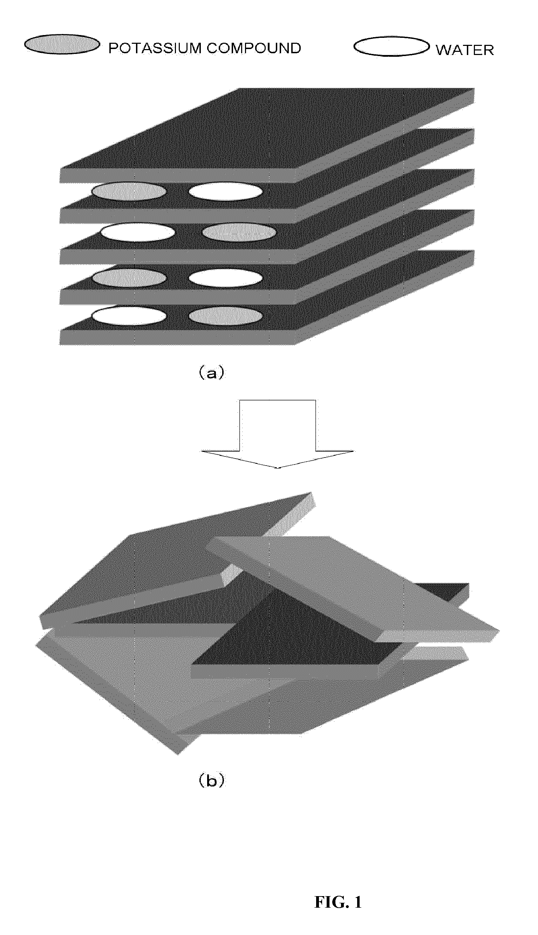

In the present invention, the core material is produced by mixing a talc-based clay mineral, a potassium compound selected from potassium carbonate and potassium bicarbonate, and water to prepare a core starting material composition, molding this core starting material composition into a desired shape, and then firing the resultant core starting material composition at a temperature lower than a melting point of the talc-based clay mineral. Mixing the talc-based clay mineral, the potassium compound, and the water inserts the water and potassium compound between talc-based clay mineral layers, causing the talc-based clay mineral to swell, as shown in Fig. 1(a). Then, the core starting material composition is fired. As a result, blowing gas, such as water vapor, carbon dioxide, and hydrogen carbonate gas, is generated from the water and potassium compound inserted between the talc-based clay mineral layers, expanding the spaces between the talc-based clay mineral layers and cleaving the talc-based mineral into layers. Thus obtained talc cleaved objects are stacked intricately, forming the card-house structure, as shown in Fig. 1(b). The stacked talc cleaved objects are partially bonded to each other as a result of firing the core starting material composition, establishing the card-house structure. Furthermore, at the time of firing the core starting material composition, the potassium compound pyrolytically decomposes, generating by-products such as potassium carbonate and potassium oxide. These by-products are intermixed with, or partially bonded to, the talc cleaved objects.

The talc-based clay mineral used in the core starting material composition preferably has an average particle diameter of 1 to 25 µm or more preferably 1 to 20 µm. As long as the average particle diameter of the talc-based clay mineral is within the abovementioned ranges, the core material with high porosity and a pore size smaller than the mean free path of the gaseous molecules can be obtained easily. Note that the average particle diameter of the talc-based clay mineral, according to the present invention, is measured by laser diffractometry.

The content of the talc-based clay mineral to be mixed in the core starting material composition is preferably 10 to 50 mass%, more preferably 20 to 40 mass%, or even more preferably 25 to 35 mass%. When the content of the talc-based clay mineral is less than 10 mass%, the content of the potassium compound in the core starting material composition increases, generating a large amount of blowing gas at the time of firing the core starting material composition. Consequently, the pore size of the core material is likely to increase. When, however, the content of the talc-based clay mineral exceeds 50 mass%, the content of the potassium compound decreases, generating little blowing gas at the time of firing the core starting material composition. As a result, the talc-based clay mineral cannot be cleaved sufficiently, and the porosity of the core material becomes low.

The potassium compound used in the core starting material composition preferably has an average particle diameter of 1 to 100 µm or more preferably 1 to 50 µm. As long as the average particle diameter of the potassium compound is within the abovementioned ranges, good miscibility can be obtained between the potassium compound and the talc-based clay mineral, and the talc-based clay mineral can be cleaved easily. Note that, in the present invention, the average particle diameter of the potassium compound is obtained by observing any portion of the potassium compound under the SEM and measuring narrow sides of 100 particles selected on the obtained SEM image of the observed portion.

The potassium compound is contained in the core starting material composition in a content of, preferably, 50 to 90 mass%, more preferably 60 to 80 mass%, or even more preferably 65 to 75 mass%. When the content of the potassium compound is less than 50 mass%, only a small amount of blowing gas is generated at the time of firing the core starting material composition. Consequently, the talc-based clay mineral cannot be cleaved sufficiently, and the porosity of the core material tends to decrease. Moreover, the amount of potassium carbonate decreases as well, degrading the effect of removing outgas, moisture and the like. When, however, the content of the potassium compound exceeds 90 mass%, a large amount of blowing gas is generated at the time of firing the core starting material composition, increasing the pore size of the core material.

It is preferred that the water be mixed in the core starting composition in a content of 5 to 20 parts by mass, more preferably 7 to 20 parts by mass, or particularly preferably 10 to 20 parts by mass, with respect to a total of 100 parts by mass of the talc-based clay mineral and the potassium compound. The core starting material composition can be molded into a desired shape by containing water. An excessive content of water in the core starting material not only deteriorates the formability of the core starting material composition but also lengthens the time required for drying the core starting material composition and generates cracks on the core starting material composition at the time of firing the core starting material composition. Thus, the maximum content of water is preferably 20 parts by mass. The minimum content of water is preferably 5 parts by mass in view of the formability of the core starting material composition.

According to the present invention, in addition to the starting materials mentioned above, the core starting material composition preferably contains an organic foaming agent with an amide group and/or azo group.

With the organic foaming agent in the core starting material composition, the talc-based clay mineral can be cleaved easily, and the card-house structure can be formed easily, resulting in a core material having excellent thermal insulation, but the detailed reason is unknown.

Examples of the organic foaming agent include azodicarbonamide.

It is preferred that the organic foaming agent be mixed in the core starting composition in a content of 1 to 50 parts by mass or more preferably 5 to 20 parts by mass, with respect to a total of 100 parts by mass of the talc-based clay mineral and the potassium compound. When the content of the organic foaming agent is less than 1 part by mass, almost no supplemental effects are obtained. When the content of the organic foaming agent exceeds 50 parts by mass, a large amount of blowing gas is generated at the time of firing the core starting material composition, increasing the pore size of the core material.

In the present invention, an inorganic foaming agent, an organic foaming agent other than the abovementioned organic foaming agent and the like may be added to the core starting material composition as needed within a range not damaging the physical properties thereof.

Next, the core starting material composition prepared in the manner described above is molded into a desired shape. The method for molding the core starting material composition is not particularly limited. Examples thereof include roll forming, press molding, and extrusion molding. Above all, roll forming is preferred due to its low device cost and running cost, as well as its excellent productivity. Roll-forming the core starting material composition can improve the orientation of the talc-based clay mineral and construct the card-house structure easily.

Subsequently, the core molded article that is molded into a desired shape is heated and fired at a temperature lower than the melting point of the talc-based clay mineral, to generate the porous fired body. The firing temperature is preferably lower than the melting point of the talc-based clay mineral by 10 to 200°C. More specifically, it is preferred that the firing temperature be 700 to 1,000°C or more preferably 750 to 900°C. The firing time is preferably 5 to 12 hours or more preferably 6 to 10 hours. When the core molded article is heated at a temperature higher than the melting point of the talc-based clay mineral, the card-house structure cannot be formed, and the obtained fired substance becomes dense. Heating the core molded article at a temperature lower than the melting point of the talc-based clay mineral, pyrolytically decomposes the water and the potassium compound between the talc-based clay mineral layers, generating the blowing gas such as water vapor, carbon dioxide, and hydrogen carbonate gas. As a result of the generation of the blowing gas, the talc-based clay mineral layers are spread and cleaved. The sections where these talc cleaved objects come into contact with each other are partially bonded to each other by a solid-state reaction, establishing the card-house structure. The potassium compound is pyrolytically decomposed substantially completely as a result of heating the core molded article at 700°C or higher. Consequently, the blowing gas can be generated efficiently, and the talc-based clay mineral can be cleaved efficiently. Heating the core molded article at low temperature makes it difficult for the potassium compound to pyrolytically decompose and generates only a small amount of blowing gas. Consequently, the talc-based clay mineral cannot be cleaved easily. The potassium compound contained in the core molded article is partially or entirely pyrolytically decomposed into blowing gas, such as carbon dioxide or hydrogen carbonate gas, potassium oxide, and/or potassium carbonate. The blowing gas is discharged to the atmosphere, whereas the potassium oxide or potassium carbonate remains in the porous fired body.

In the present invention, it is preferred that the core molded article be dried before being fired. A method for drying the core molded article is not particularly limited. Examples thereof include hot-air drying, sun drying, vacuum drying, subcritical drying, and supercritical drying. Drying the core molded article can prevent cracks and the like from forming during the firing process performed subsequent to the drying process.

The core material obtained in this manner preferably has a bulk density of 0.2 to 1.8 g/cm³, more preferably 0.2 to 1.5 g/cm³, or particularly preferably 0.2 to 1.0 g/cm³, before being vacuum packaged. It is preferred that the porosity of the core material be 50 to 90%, more preferably 70 to 90%, or particularly preferably 75 to 90%.

Next, this core material is disposed in a gas-barrier packaging, sealed, and vacuum packaged after the pressure inside the packaging is reduced.

The pressure inside the packaging is preferably reduced to 10 Pa or lower, or preferably to 1 to 10 Pa.

It is preferred that the core material, vacuum packaged, have a bulk density of 0.22 to 1.98 g/cm³ or more preferably 0.22 to 1.65 g/cm³. The porosity of the vacuum-packaged core material is preferably 45 to 82% or more preferably 63 to 82%.

The vacuum insulation material of the present invention that is obtained in this manner keeps low thermal conductivity and excellent thermal insulation even in a high-temperature environment. Furthermore, because the potassium carbonate and the like can absorb/remove moisture and outgas, the degree of vacuum inside the packaging does not decrease easily, providing excellent thermal insulation over a long period of time. The thermal conductivity at an average temperature of 20°C with a temperature difference of 20°C is preferably 0.015 W/mK or lower, more preferably 0.001 to 0. 015 W/mK, or particularly preferably 0.001 to 0.010 W/mK.

The vacuum insulation material according to the present invention can preferably be used in various industries associated with electrical products such as freezers, refrigerators, heat insulation containers and vending machines, as well as wall materials for housing.

### Examples

### [Text Example 1]

### (Example 1)

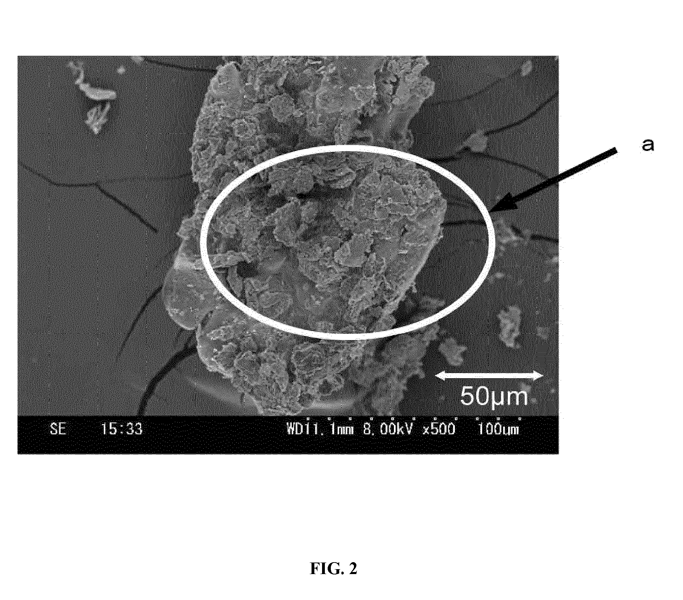

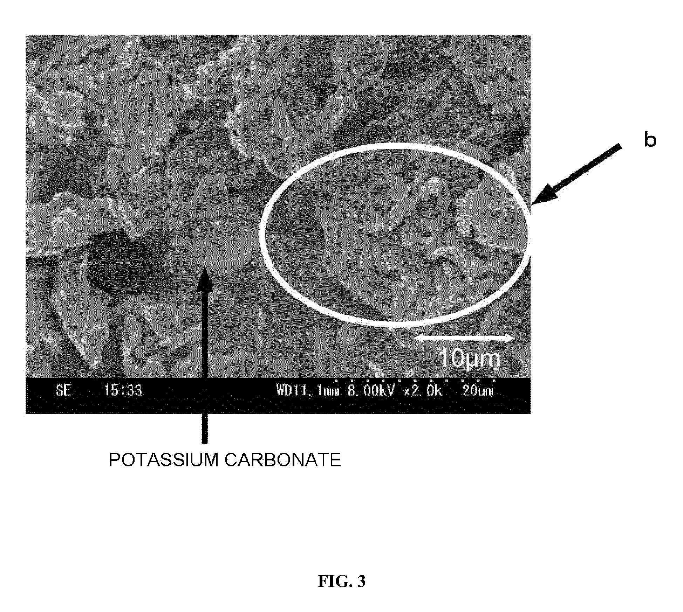

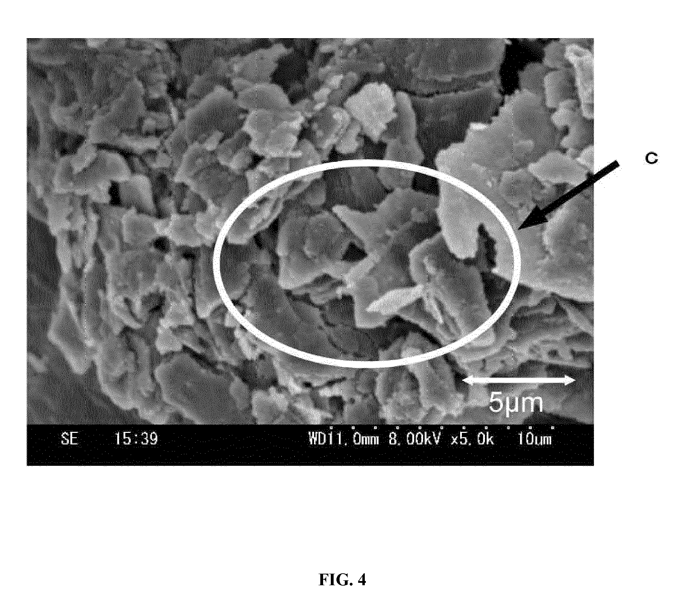

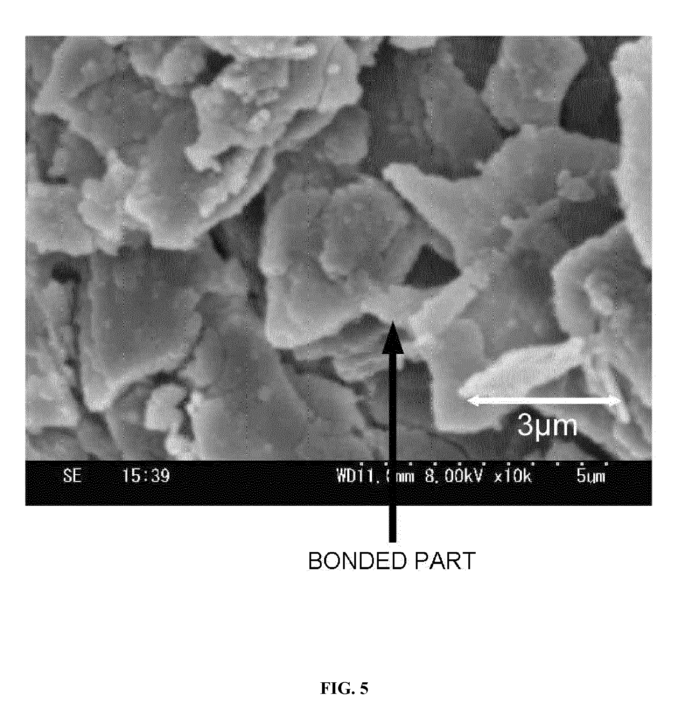

Talc (average particle diameter: 14 µm) in a content of 400 g, potassium bicarbonate (average particle diameter: 50 µm) in a content of 600 g, water in a content of 200 g, and azodicarbonamide in a content of 50 g, were mixed and kneaded to prepare a core starting material composition. This core starting material composition was roll-formed into a 5-mm thick sheet to obtain a green sheet (core molded particle). This green sheet was placed in an electric furnace and fired at 900°C. The fired green sheet (fired body) was placed in a vacuum drier and vacuum-dried at 150°C for 2 hours. Thereafter, while keeping the vacuum in the vacuum drier, the vacuum-dried sheet was cooled to room temperature, to produce a core material. Electron micrographs of the obtained core material are shown in Figs. 2 to 5. Fig. 2 is an enlarged view of the core material at a magnification of 500. Fig. 3 is an enlarged view of a range a shown in Fig. 2 at a magnification of 2,000. Fig. 4 is an enlarged view of a range b shown in Fig. 3 at a magnification of 5, 000. Fig. 5 is an enlarged view of a range c shown in Fig. 4 at a magnification of 10,000.

Next, the obtained core material was placed in a three-side sealed bag of a laminated film made of polyamide, aluminum foil, and polyethylene. The bag was vacuum-locked with an inside pressure reduced to 10 Pa or lower in a vacuum chamber, to prepare a vacuum insulation material.

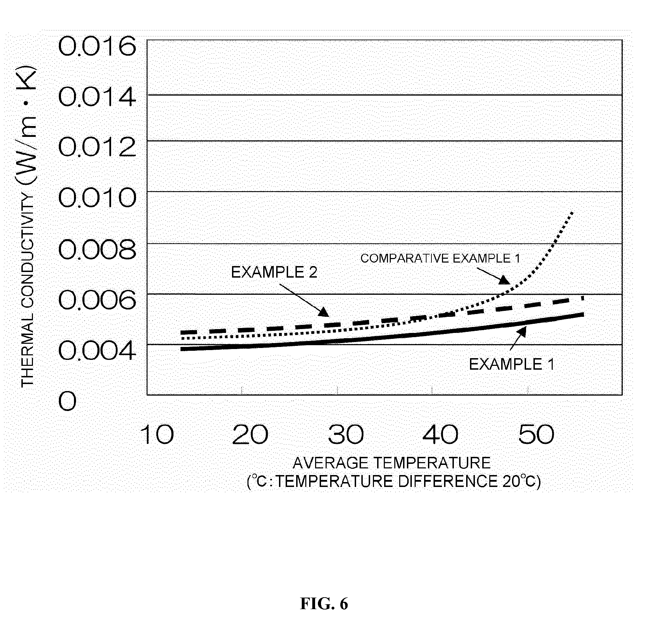

The thermal conductivity of the obtained vacuum insulation material was measured using a thermal conductivity meter (HC-074, manufactured by Eko Instruments Co., Ltd.) at an average temperature of 20 to 60°C with a temperature difference of 20°C on the basis of JIS-A1412. The result is shown in Fig. 6. The thermal conductivity was 0.004 W/mK at an average temperature of 20°C.

### (Example 2)

In Example 1, a core starting material composition was prepared in the same manner as in Example 1, except that azodicarbonamide was not added. Then, using this core starting material composition, a vacuum insulation material was produced in the same manner as in Example 1.

The thermal conductivity of the obtained vacuum insulation material was measured using the thermal conductivity meter (HC-074, manufactured by Eko Instruments Co., Ltd.) at an average temperature of 20 to 60°C with a temperature difference of 20°C on the basis of JIS-A1412. The result is shown in Fig. 6. The thermal conductivity was 0.005 W/mK at an average temperature of 20°C.

### (Example 3)

In Example 1, the core starting material composition was placed in a die and then pressure-molded using a press, to obtain a green sheet (a core molded article). A vacuum insulation material was produced in the same manner as in Example 1 by using this green sheet.

The thermal conductivity of the obtained vacuum insulation material was measured using the thermal conductivity meter (HC-074, manufactured by Eko Instruments Co., Ltd.) at an average temperature of 20°C with a temperature difference of 20°C on the basis of JIS-A1412. As a result, the thermal conductivity was 0.006 W/mK.

### (Comparative Example 1)

A glass fiber core material was placed in a bag of a laminated film made of polyamide, aluminum foil, and polyethylene. The bag was vacuum-locked with an inside pressure reduced to 10 Pa or lower in a vacuum chamber, to obtain a vacuum insulation material (product name "U-Vacua," produced by Panasonic Corporation). The thermal conductivity of this vacuum insulation material was measured using the thermal conductivity meter (HC-074, manufactured by Eko Instruments Co., Ltd.) at an average temperature of 20 to 60°C with a temperature difference of 20°C on the basis of JIS-A1412. The result is shown in Fig. 6. The thermal conductivity was 0.004 W/mK at an average temperature of 20°C.

In the vacuum insulation material obtained in Comparative Example 1, the thermal conductivity has increased significantly as the ambient temperature has increased, especially when the ambient temperature reached 50°C or above, as shown in Fig. 6.

In the vacuum insulation materials obtained in Examples 1 and 2, on the other hand, the thermal conductivities did not change much even when the ambient temperature has increased. Thus, these vacuum insulation materials provide excellent thermal insulation in a high-temperature environment.

### (Test Example 2)

In Example 1, the talc (average particle diameter: 14 µm) and the potassium bicarbonate (average particle diameter: 50 µm) were changed at the rate shown in Table 1, to prepare core starting material composition samples 1 to 11. With these core starting material composition samples, vacuum insulation materials were produced in the same manner as in Example 1.

**[Table 1]**

| | Sample 1 | Sample 2 | Sample 3 | Sample 4 | Sample 5 | Sample 6 | Sample 7 | Sample 8 | Sample 9 | Sample 10 | Sample 11 |
|---|---|---|---|---|---|---|---|---|---|---|---|
| Talc (g) | 1,000 | 900 | 800 | 700 | 600 | 500 | 400 | 300 | 200 | 100 | 0 |
| Potassium bicarbona te (g) | 0 | 100 | 200 | 300 | 400 | 500 | 600 | 700 | 800 | 900 | 1,000 |

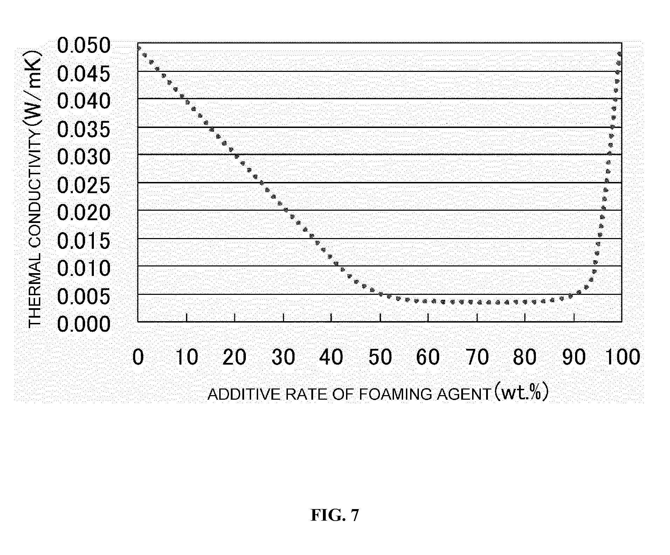

The conductivity of each vacuum insulation material was measured using the thermal conductivity meter (HC-074, manufactured by Eko Instruments Co., Ltd.) at an average temperature of 20°C with a temperature difference of 20°C on the basis of JIS-A1412. The result is shown in Fig. 7.

As shown in Fig. 7, for the vacuum insulation material that was produced by using the core starting material composition containing 50 to 90 mass% of potassium compound in the solid content, the thermal conductivity was particularly low at an average temperature of 20°C.

## Claims

1. A vacuum insulation material, comprising a core material formed of a porous fired body in which a layered structure of a talc-based clay mineral is cleaved and at least a portion of the cleaved structure is partially bonded,
wherein the core material is vacuum packaged in a gas-barrier packaging.

2. The vacuum insulation material according to claim 1, wherein the core material contains 13 to 59 mass% of the talc-based clay mineral and 41 to 87 mass% of a potassium compound.

3. The vacuum insulation material according to claim 2, wherein the potassium compound is at least one type selected from potassium oxide, potassium carbonate, and potassium bicarbonate.

4. The vacuum insulation material according to any one of claims 1 to 3, wherein the core material has a bulk density of 0.22 to 1.98 g/cm³ in a vacuum-packaged state thereof.

5. The vacuum insulation material according to any one of claims 1 to 4, wherein the core material has a porosity of 45 to 82% in a vacuum-packaged state thereof.

6. The vacuum insulation material according to any one of claims 1 to 5, wherein a thermal conductivity obtained at an average temperature of 20°C is 0.015 W/mK or lower.

7. A method for producing a vacuum insulation material, comprising the steps of:
producing a core material by molding a core starting material composition into a predetermined shape, the core starting material composition containing a talc-based clay mineral, a potassium compound selected from potassium carbonate and potassium bicarbonate, and water, and by firing the resultant core starting material composition at a temperature lower than a melting point of the talc-based clay mineral; and
vacuum packaging the produced core material in a gas-barrier packaging.

8. The method for producing a vacuum insulation material according to claim 7, wherein the talc-based clay mineral has an average particle diameter of 1 to 25 µm.

9. The method for producing a vacuum insulation material according to claim 7 or 8, wherein the core starting material composition contains 10 to 50 mass% of the talc-based clay mineral and 50 to 90 mass% of the potassium compound in a solid content and further contains 5 to 20 parts by mass of the water with respect to a total of 100 parts by mass of the talc-based clay mineral and the potassium compound.

10. The method for producing a vacuum insulation material according to any one of claims 7 to 9, wherein the core starting material composition contains 1 to 50 parts by mass of an organic foaming agent with an amide group and/or azo group with respect to a total of 100 parts by mass of the talc-based clay mineral and the potassium compound.

11. The method for producing a vacuum insulation material according to any one of claims 7 to 10, wherein the core starting material composition is roll-formed and thereafter fired.

12. The method for producing a vacuum insulation material according to any one of claims 1 to 11, wherein the core starting material composition is fired at 700 to 1,000°C.

13. The method for producing a vacuum insulation material according to any one of claims 7 to 12, wherein the core material has a bulk density of 0.2 to 1.8 g/cm³ before being vacuum packaged and 0.22 to 1.98 g/cm³ after being vacuum packaged.

14. The method for producing a vacuum insulation material according to any one of claims 7 to 13, wherein the core material has a porosity of 50 to 90% before being vacuum packaged and 45 to 82% after being vacuum packaged.
